# FASCICULE DE BREVET EUROPEEN

(11) **EP 2 561 190 B1**
(45) Date de publication et mention de la délivrance du brevet: **18.03.2015**
(21) Numéro de dépôt: 11713261.3
(22) Date de dépôt: 07.04.2011
(51) Int. Cl.: F01L 1/344, F01L 1/352, F16L 33/08, F16L 55/17

(54) **COLLIER D'ETANCHEITE**
DICHTUNGSMANSCHETTE
SEALING COLLAR

(30) Priorité: 21.04.2010 FR 1053032
(43) Date de publication de la demande: 27.02.2013
(73) Titulaire: Delphi Technologies, Inc., Troy, MI 48007 (US)
(72) Inventeur: DAVID, Pascal, L-6235 Beidweiler (LU); CARRIERE, Alain, F-57310 Bousse (FR); KIMUS, Pierre, B-66717 Attert (BE)
(74) Mandataire: Allain, Michel Jean Camille
(86) Numéro de dépôt international: PCT/EP2011/055403
(87) Numéro de publication internationale: WO 2011/131489

(56) Documents cités:
- EP-A1- 2 017 518
- DE-A1- 10 362 023
- JP-A- 10 331 614
- US-A- 2 586 640
- US-A- 5 706 862
- US-A1- 2004 094 962

## Description

### DOMAINE TECHNIQUE

L'invention est relative à un ensemble comprenant un corps cylindrique pourvu d'un trou par lequel un fluide peut fuir et un collier adaptable au corps cylindrique de sorte à obturer le trou de manière étanche.

### ARRIERE-PLAN TECHNOLOGIQUE DE L'INVENTION

Certaines machines comprenant un corps cylindrique sont pourvues d'un trou radial débouchant. Ce trou est utilisé lors du montage ou de la maintenance de la machine. Un outil est inséré depuis l'extérieure permettant la mise en position ou d'indexation des composants internes à la machine. Une fois la machine montée dans son environnement, l'outil est retiré. Dans le cas où un fluide circule dans la machine le trou de montage doit impérativement être étanchéifié avant la mise en service.

Pour ce faire un collier de serrage métallique est installé autour du corps cylindrique, la bande du collier passant sur le trou. Un tel collier est connu par exemple du document US, 5,706,862 A, qui dévoile le préambule de la revendication 1. Le collier est ensuite serré autour du corps de la machine et la bande du collier obture le trou. Ce genre de système fonctionne, cependant, dans un environnement soumis à des vibrations, des variations importantes de température ou de pression, il arrive que le collier se desserre légèrement mais suffisamment pour se déplacer relativement au corps cylindrique. Dans ce cas l'étanchéité du trou n'est plus assurée et une fuite peut se produire.

Il en est ainsi, par exemple, de certains déphaseurs hydraulique d'arbre à cames pour moteurs à combustion interne. De tels déphaseurs comprennent un stator entraîné en rotation par le moteur et un rotor entraîné en rotation par le stator et solidaire de l'arbre à cames ; en fonctionnement, la position angulaire du rotor à l'intérieure du stator pouvant être ajustée grâce à un fluide sous pression. Le stator est pourvu d'un trou radial débouchant utilisé au montage pour l'insertion d'un outil d'indexation du rotor par rapport au stator, l'outil maintenant le déphaseur dans une position choisie.

### RESUME DE L'INVENTION

La présente invention résous le problème ci-dessus mentionné en proposant l'agencement d'un collier d'étanchéité serré autour du corps cylindrique de la machine à étanchéifier.

L'invention propose également un procédé pour assurer l'étanchéité d'un corps cylindrique d'une machine.

L'invention propose d'obturer durablement et de manière étanche le trou en agençant sur le corps cylindrique un collier pourvu d'au moins une griffe dirigée vers le corps. Lors du serrage du collier, la griffe est pressée contre le corps et marque une empreinte dans la paroi cylindrique du corps solidarisant ainsi le collier sur le corps cylindrique. La liaison du collier sur le corps est donc avantageusement assurée à la fois par le serrage et par la griffe.

Dans le cas particuliers d'un corps soumis de manière continue à un environnement fortement contraignant, tel un déphaseur d'arbre à cames pour moteur de véhicule, l'environnement comprenant des vibrations, des variations de températures, des chocs, du fluide sous pression variable, etc..., de micros déplacements du collier relativement au corps sont possibles. Aussi cette double liaison a l'avantage que le collier reste en place sans micros déplacement et le trou reste obturé de manière étanche.

Plus précisément, l'invention est relative à un ensemble comprenant un collier d'étanchéité et un corps, selon les caractéristiques de la revendication 1.

La portion de la bande de fixation destinée à obturer le trou est dépourvu de griffe de sorte à ne pas risquer une fuite.

Plus précisément, la griffe s'étend depuis un bord de la bande de fixation.

Il est possible de pourvoir une pluralité de griffes sur la bande.

L'invention concerne également une machine comprenant un corps cylindrique dans lequel se trouve un fluide, le corps étant pourvu d'un trou radial débouchant, obturé au moyen d'un collier d'étanchéité du trou, la machine et le collier formant un ensemble selon les caractéristiques précédentes.

Plus précisément ladite machine est un déphaseur angulaire d'arbre à cames pour moteur à combustion interne.

L'invention est également relative à un procédé pour assurer l'étanchéité d'un corps cylindrique au sein duquel se trouve un fluide. Le corps est pourvu d'un trou radial débouchant par lequel le fluide peut s'échapper. Le procédé comprend les étapes suivantes :
- former un ensenble comprenant un collier d'étanchéité et le corps comme précédemment décrit, de sorte que la portion d'étanchéité de la bande de fixation recouvre entièrement le trou à obturer et également de sorte que la griffe, ou les griffes, soit orientée vers le corps cylindrique,
- fermer et serrer le collier autour du corps cylindrique de sorte que la, ou les, griffe soit pressée contre le corps, y marque une empreinte et contribue à immobiliser le collier sur le corps.

Le procédé de réalisation du collier comprend les étapes suivantes :
- former une bande dans un matériau adapté, tel de l'acier, la bande ayant une longueur suffisante pour entourer entièrement le corps cylindrique auquel le collier est destiné, et ayant de plus une portion destinée à obturer le trou, ladite portion ayant une largeur suffisante pour entièrement recouvrir le trou à obturer ;
- opérer le long de la bande, en dehors de la portion destinée à obturer le trou de manière étanche, au mois une découpe en biais s'étendant du bord de la bande vers l'intérieur de la bande, sans dépasser la moitié de sa largeur, et formant ainsi au moins un secteur d'angle aigu sur le côté de la bande ;
- plier le secteur d'angle aigu de sorte à former une griffe par rapport à la bande et, dans le cas d'une pluralité de découpes, plier tous les secteurs d'angle du même côté de la bande de sorte à orienter toutes les griffes en direction du corps cylindrique ;
- associer la bande à un moyen de fermeture et de serrage.

### BREVE DESCRIPTION DES DESSINS

Un mode de réalisation de l'invention est maintenant décrit par l'intermédiaire des figures suivantes.
La Figure 1 est une vue en perspective d'un déphaseur d'arbre à cames pourvu d'un trou servant à l'indexation des composants lors du montage.
La Figure 2 est une vue en perspective d'un collier d'étanchéité selon l'invention.
La Figure 3 est une vue d'ensemble de l'agencement selon l'invention, le collier d'étanchéité de la Figure 2 étant monté serrer sur le déphaseur de la Figure 1.

### DESCRIPTION DES MODES DE REALISATION PREFERES

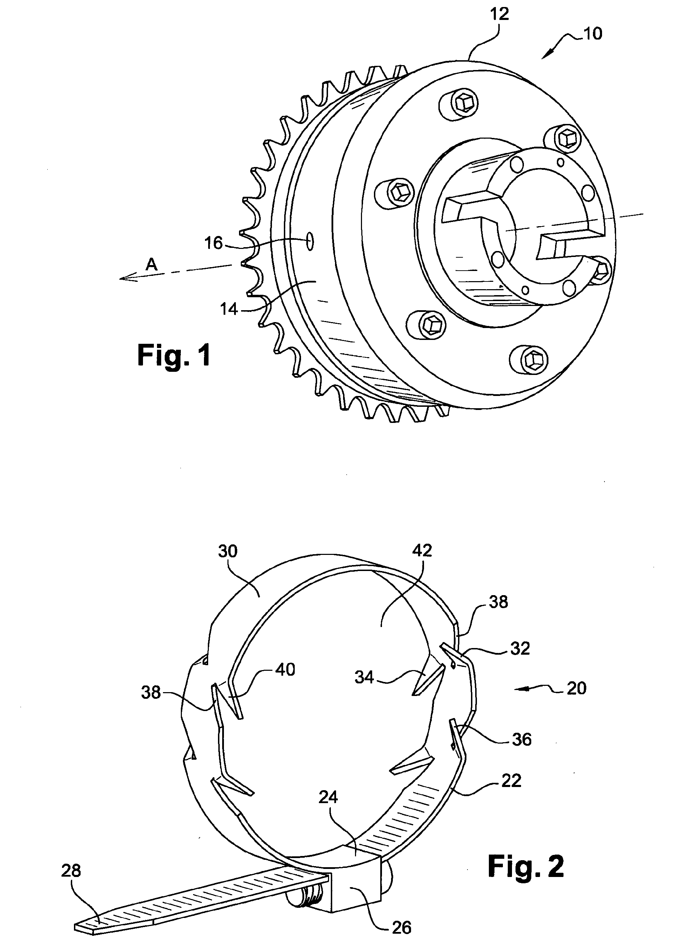

La Figure 1 représente un déphaseur hydraulique 10 d'arbre à cames comprenant un stator 12 et un rotor positionné dans le stator 12. Le stator 12 est pourvu d'une paroi cylindre 14 dans laquelle débouche radialement un trou 16. Durant les étapes de montage, un outil spécifique (non représenté) peut être inséré dans le trou 16 de sorte à maintenir indexé le rotor relativement au stator 12.

Une fois mis en place sur un moteur à combustion, le déphaseur 10 fonctionnant avec un fluide sous pression circulant dans le stator 12, le trou 16 doit impérativement être obturé de manière étanche.

La Figure 2 représente un collier d'étanchéité 20 selon l'invention. Le collier 20 comprend une bande 22 métallique ayant une première extrémité 24 pourvu d'un dispositif 26 de fermeture et de serrage et d'une seconde extrémité 28 libre. La bande métallique 22 est recourbée sur elle-même de sorte que l'extrémité libre 28 rejoigne le dispositif de fermeture 26. Ainsi, le collier 20 forme une boucle fermée dont le diamètre intérieur peut être ajusté à celui du déphaseur 10.

Le dispositif 26 de fermeture et de serrage représenté est un mécanisme à vis. D'autres systèmes connus peuvent être utilisés alternativement tels, par exemple, des systèmes à crochets.

La bande métallique 22 comprend une portion 30 prévue pour être placée sur le trou 16 et le boucher. Cette portion 30 de la bande est d'une largeur suffisante pour entièrement obturer le trou 16. La Figure 2 représente un collier 20 dont la bande 22 est de largeur constante égale à celle de la portion d'étanchéité 30. Une alternative possible est de choisir des largeurs différentes pour la partie d'étanchéité 30 et les extrémités 24, 28. Une transition progressive entre les différentes largeurs est souhaitable, mais non obligatoire, de sorte à éviter les zones de concentration de contraintes.

La bande métallique 22 de la Figure 2 est pourvue de griffes 32, 34, 36, situées en dehors de la portion d'étanchéité. Une alternative possible est un collier 20 ne présentant qu'une griffe 32. Tel que représenté Figure 2, les griffes 32, 34, 36, ont été formées suite à une découpe 38 partielle de la bande 22. Chaque découpe 38 s'étend depuis un des côtés de la bande vers l'intérieure de celle-ci mais ne dépasse pas la moitié de la largeur de la bande 22. La découpe 38 est en biais de sorte à former un secteur angulaire aigu 40 qui est ensuite recourbé en forme de griffe 32, 34, 36, vers l'intérieure 42 de la boucle du collier 20. La Figure 2 présente un collier 20 munis de plusieurs griffes 32, 34, 36, ainsi formées et il est important que toutes les griffes 32, 34, 36, soient pliées vers l'intérieur de la boucle 42. Comme il est représenté sur la Figure 2, tout en étant toutes pliées vers l'intérieur de la boucle 42, les griffes peuvent être orientées dans des sens opposées telles les griffes 34 et 36.

Une alternative possible (non représentée) est de réaliser le collier 20 à partir d'une bande 22 plate dentelée sur ses côtés, puis de plier en direction de l'intérieur de la boucle 42 les dents qui sont en dehors de la portion d'étanchéité 30.

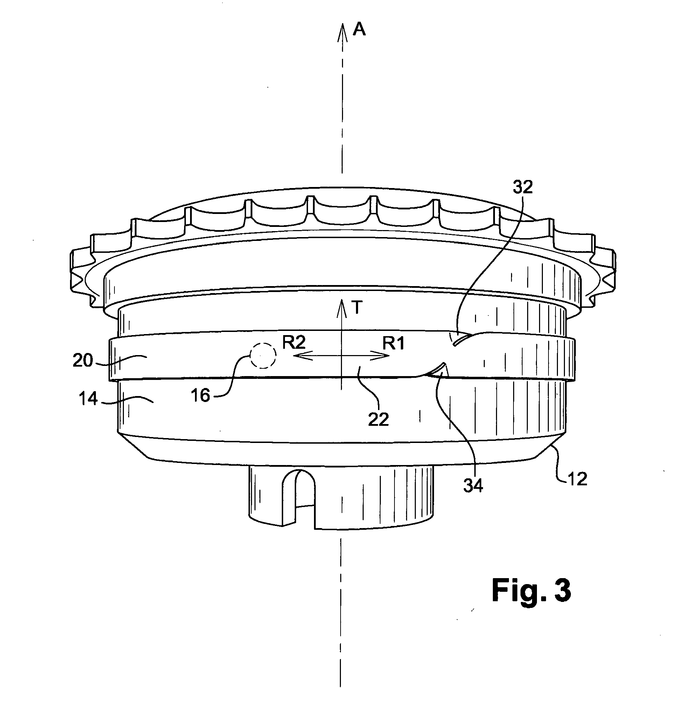

La Figure 3 représente l'agencement du collier 20 d'étanchéité de la Figure 2 sur le déphaseur 10 hydraulique de la Figure 1. Dans cet agencement, le collier 20 est serré sur la paroi cylindrique 14 de sorte que la portion d'étanchéité 30 du collier 20 obture le trou 16. Les griffes 32, 34, 36, du collier 20 sont pressées contre la paroi cylindrique 14 et y marquent une empreinte. Ainsi les griffes 32, 34, 36 assurent la position du collier 20 et, interdisent tout déplacement du collier 20 relativement au stator 12. De tels déplacements risqueraient d'engendrer une fuite par débouchage du trou 16.

Les déplacements envisagés du collier 20 sont soit une translation par glissement simple parallèlement à l'axe principal A de la paroi cylindrique 14, soit une rotation R1, R2 autour de l'axe principal A de la paroi cylindrique 14, soit la combinaison de translation T d'une rotation R1, R2. La rotation pouvant s'effectuer dans un premier sens R1 ou dans le sens opposé R2. Les griffes 32, 34, 36 s'opposent toutes à la translation T du collier 20 cependant, une griffe 32, 34, 36 s'oppose d'autant plus à une rotation R1, R2 que celle-ci aura tendance à faire pénétrer la griffe 32, 34, 36, dans le stator 12. Il est donc intéressant, mais non indispensable, de prévoir des griffes 32, 34, 36 orientées dans des sens opposées telles les griffes 34 et 36 de la Figure 2.

## Revendications

1. Ensemble comprenant un collier d'étanchéité (20) et un corps (12),
le corps (12) ayant une paroi cylindrique (14) où débouche un trou (16), un fluide situé dans le corps (12) pouvant s'échapper par le trou (16),
le collier d'étanchéité (20) comprenant
une bande de fixation (22) entourant entièrement la paroi cylindrique (14), la bande (22) ayant une portion (30) destinée à obturer le trou (16) de manière étanche,
et un moyen de fermeture et de serrage (26) de la bande de fixation (22),
l'ensemble étant **caractérisé en ce que**
la bande de fixation (22) est pourvue d'au moins une griffe (32, 34, 36) s'étendant en direction de la paroi cylindrique (14) de sorte que, lors de la fermeture et du serrage de la bande de fixation (22) autour de la paroi cylindrique (14), le trou (16) est obturé de manière étanche, la griffe (32, 34, 36) est pressée contre la paroi cylindrique (14), y marque une empreinte et contribue à immobiliser le collier (20) sur le corps (12).

2. Ensemble selon la revendication 1, dans lequel la portion (30) de la bande de fixation (22) destinée à obturer le trou (16) est dépourvue de griffe.

3. Ensemble, selon une quelconque des revendications précédentes, dans lequel la griffe (32, 34, 36) s'étend depuis un bord de la bande de fixation (22).

4. Ensemble, selon une quelconque des revendications précédentes, dans lequel la bande de fixation (22) est pourvue d'une pluralité de griffes (32, 34, 36).

5. Machine (10) comprenant un corps cylindrique (12) dans lequel se trouve un fluide et un collier d'étanchéité (20), le corps (12) étant pourvu d'un trou (16) radial débouchant obturé au moyen dudit collier d'étanchéité (20), le corps (12) de la machine (10) et le collier (20) formant un ensemble selon une quelconque des revendications précédentes.

6. Machine (10), selon la revendication 5, **caractérisée en ce que** la machine est un déphaseur angulaire d'arbre à cames pour moteur à combustion interne.

7. Procédé pour assurer l'étanchéité d'un corps (12) cylindrique au sein duquel se trouve un fluide, le corps (12) étant pourvu d'un trou radial (16) débouchant par lequel le fluide peut s'échapper, le procédé comprenant les étapes de :
- former un ensemble comprenant un collier d'étanchéité (20) et le corps (12) selon une des revendications 1 à 4, de sorte que la portion (30) d'étanchéité de la bande de fixation (22) recouvre entièrement le trou (16) à obturer et également de sorte que la griffe (32, 34, 36), ou les griffes, soit orientée vers le corps cylindrique (12),
- fermer et serrer le collier (20) autour du corps cylindrique (12) de sorte que la, ou les, griffe (32, 34, 36) pressée contre le corps (12) y marque une empreinte et contribue à immobiliser le collier (20) sur le corps (12).

8. Procédé, selon la revendication 7, dans lequel le collier (20) est réalisé selon les étapes suivantes :
- former une bande (22) dans un matériau adapté, tel de l'acier, la bande (22) ayant une longueur suffisante pour entourer entièrement le corps cylindrique (12) auquel le collier (20) est destiné, et ayant de plus une portion (30) destinée à obturer le trou (16) de manière étanche, ladite portion (30) ayant une largeur suffisante pour entièrement recouvrir le trou (16) à obturer ;
- opérer le long de la bande (22), en dehors de la portion (30) destinée à obturer le trou (16), au mois une découpe (38) en biais s'étendant du bord de la bande (22) vers l'intérieur de la bande (22), sans dépasser la moitié de sa largeur, et formant ainsi au moins un secteur d'angle aigu (40) sur le côté de la bande(22);
- plier le secteur d'angle aigu (40) de sorte à former une griffe (32, 34, 36) par rapport à la bande (22) et, dans le cas d'une pluralité de découpes (38), plier tous les secteurs d'angle (40) du même côté de la bande (22) de sorte à orienter toutes les griffes (32, 34, 36) en direction du corps cylindrique (12) ;
- associer la bande (22) à un moyen de fermeture et de serrage (26).

## Patentansprüche

1. Anordnung mit einer Dichtungsmanschette (20) und einem Körper (12), wobei der Körper (12) eine zylindrische Wand (14) aufweist, wo ein Loch (16) ausmündet, wobei ein in dem Körper (12) befindliches Medium über das Loch (16) entweichen kann,
wobei die Dichtungsmanschette (20) aufweist:
ein Befestigungsband (22), das die zylindrische Wand (14) vollständig umgibt, wobei das Band (22) einen Abschnitt (30) aufweist, der dazu bestimmt ist, das Loch (16) in dichter Weise zu verschließen,
und ein Schließ- und Spannmittel (26) für das Befestigungsband (22), wobei die Anordnung **dadurch gekennzeichnet ist, dass**
das Befestigungsband (22) mit zumindest einer Klaue (32, 34, 36) versehen ist, die sich in Richtung der zylindrischen Wand (14) erstreckt, so dass beim Schließen und Spannen des Befestigungsbandes (22) um die zylindrische Wand (14) herum das Loch (16) in dichter Weise verschlossen wird, wobei die Klaue (32, 34, 36) an die zylindrische Wand (14) gedrückt wird, darin eine Einprägung erzeugt und dazu beiträgt, die Manschette (20) am Körper (12) festzulegen.

2. Anordnung nach Anspruch 1, wobei der zum Verschließen des Loches (16) bestimmte Abschnitt (30) des Befestigungsbandes (22) keine Klaue aufweist.

3. Anordnung nach einem der vorangehenden Ansprüche, wobei die Klaue (32, 34, 36) sich von einem Rand des Befestigungsbandes (22) ausgehend erstreckt.

4. Anordnung nach einem der vorangehenden Ansprüche, wobei das Befestigungsband (22) mit einer Mehrzahl von Klauen (32, 34, 36) versehen ist.

5. Maschine (10) mit einem zylindrischen Körper (12), in welchem sich ein Medium befindet, und mit einer Dichtungsmanschette (20), wobei der Körper (12) mit einem durchgehenden radialen Loch (16) versehen ist, das mittels der Dichtungsmanschette (20) verschlossen wird, wobei der Körper (12) der Maschine (10) und die Manschette (20) eine Anordnung nach einem der vorangehenden Ansprüche bilden.

6. Maschine (10) nach Anspruch 5, **dadurch gekennzeichnet, dass** die Maschine ein Drehversteller für Nockenwellen von Brennkraftmaschinen ist.

7. Verfahren zum Sicherstellen der Dichtheit eines zylindrischen Körpers (12), in dem sich ein Medium befindet, wobei der Körper (12) mit einem durchgehenden radialen Loch (16) versehen ist, über welches das Medium entweichen kann, wobei das Verfahren die nachfolgenden Schritte umfasst:
- Bilden einer Anordnung mit einer Dichtungsmanschette (20) und dem Körper (12) nach einem der Ansprüche 1 bis 4, so dass der Dichtungsabschnitt (30) des Befestigungsbandes (22) das zu verschließende Loch (16) vollständig überdeckt und so dass die Klaue (32, 34, 36) bzw. die Klauen zum zylindrischen Körper (12) gerichtet ist bzw. sind,
- Schließen und Spannen der Manschette (20) um den zylindrischen Körper (12) herum, so dass die Klaue bzw. Klauen (32, 34, 36) an den Körper (12) gedrückt werden, darin eine Einprägung erzeugen und dazu beitragen, die Manschette (20) am Körper (12) festzulegen.

8. Verfahren nach Anspruch 7, wobei die Manschette (20) nach den folgenden Schritten ausgebildet wird:
- Ausbilden eines Bandes (22) aus einem geeigneten Material, wie etwa Stahl, wobei das Band (22) eine ausreichende Länge hat, um den zylindrischen Körper (12), für den die Manschette (20) bestimmt ist, vollständig zu umschließen, und ferner einen Abschnitt (30) aufweist, der dazu bestimmt ist, das Loch (16) in dichter Weise zu verschließen, wobei der Abschnitt (30) eine ausreichende Breite hat, um das zu verschließende Loch (16) vollständig zu überdecken;
- Einbringen von zumindest einem Schrägschnitt (38) entlang des Bandes (22) außerhalb des zum Verschließen des Lochs (16) bestimmten Abschnitts, welcher Schrägschnitt sich vom Rand des Bandes (22) zum Inneren des Bandes (22) erstreckt, ohne die Hälfte seiner Breite zu überschreiten, und somit zumindest einen spitzwinkligen Sektor (40) auf der Seite des Bandes (22) bildet;
- Umbiegen des spitzwinkligen Sektors (40), so dass eine Klaue (32, 34, 36) gegenüber dem Band (22) gebildet wird und im Falle von mehreren Einschnitten (38) Umbiegen sämtlicher Winkelsektoren (40) der gleichen Seite des Bandes (22), so dass sämtliche Klauen (32, 34, 36) in Richtung des zylindrischen Körpers (12) gerichtet werden;
- Zuordnen des Bandes (22) zu einem Schließ- und Spannmittel (26).

## Claims

1. Arrangement of a sealing collar (20) on a body (12) in which the body (12) has a cylindrical wall (14) in which emerges a hole (16), a fluid situated in the body (12) being able to escape through the hole (16), and in which
the sealing collar (20) comprises
a fixing band (22) entirely surrounding the cylindrical wall (14), the band (22) having a portion (30) intended to obturate the hole (16) in sealed manner,
a means for closing and tightening (26) of the fixing band (22), **characterised by** the fact that
the fixing band (22) is provided with at least one claw (32, 34, 36) extending in the direction of the cylindrical wall (14) so that on closure and tightening of the fixing band (22) around the cylindrical wall (14), the hole (16) is obturated in sealed manner and the claw (32, 34, 36) is pressed against the cylindrical wall (14) and contributes to immobilisation of the collar (20) on the body (12).

2. Arrangement as described in claim 1 in which the portion (30) of the fixing band (22) intended to obturate the hole (16) has no claw.

3. Arrangement as described in any one of the preceding claims in which the claw (32, 34, 36) extends from an edge of the fixing band (22).

4. Arrangement as described in any one of the preceding claims in which the fixing band (22) is provided with a plurality of claws (32, 34, 36).

5. Machine (10) comprising a cylindrical body (12) in which a fluid is located, the body (12) being provided with an emerging radial hole (16), the machine (10) comprising in addition a collar (20) for sealing the hole (16), the arrangement of the collar (20) on the body (12) being in accordance with any one of the preceding claims.

6. Machine (10) as described in claim 5 **characterised by** the fact that the machine is an angular camshaft phaser for an internal combustion engine.

7. Process for ensuring the fluid-tightness of a cylindrical body (12) in which a fluid is located, the body (12) being provided with an emerging radial hole (16) through which the fluid can escape, the process comprising the steps of:
- arranging around the body (12) a sealing collar (20) as described in one of claims 1 to 4, so that the sealing portion (30) of the fixing band (22) entirely covers the hole (16) to be obturated and also so that the claw (32, 34, 36), or the claws, are orientated towards the cylindrical body (12),
- closing and tightening the collar (20) around the cylindrical body (12) so that the claw or claws (32, 34, 36) pressed against the body (12) contribute to immobilisation of the collar (20) on the body (12).

8. Process as described in claim 7 in which the collar (20) is made in accordance with the following steps:
- forming a band (22) from a suitable material, such as steel, the band (22) having a sufficient length to entirely surround the cylindrical body (12) for which the collar (20) is intended, and having in addition a portion (30) intended to obturate the hole (16) in sealed manner, the said portion (30) having a sufficient width to entirely cover the hole (16) to be obturated;
- forming along the band (22), outside the portion (30) intended to obturate the hole (16), at least one slanting cut-out (38) extending from the edge of the band (22) towards the inside of the band (22), without going beyond half of its width, and thus forming at least one acute angle sector (40) on the side of the band (22);
- bending the acute angle sector (40) so as to form a claw (32, 34, 36), relative to the band (22) and, in the case of a plurality of cut-outs (38), bending all the angle sectors (40) on the same side of the band (22) so as to orientate all the claws (32, 34, 36) in the direction of the cylindrical body (12);
- associating the band (22) with a closing and tightening means (26).
